# EUROPÄISCHE PATENTSCHRIFT

(11) **EP 1 547 921 B1**
(45) Veröffentlichungstag und Bekanntmachung des Hinweises auf die Patenterteilung: **24.01.2007**
(21) Anmeldenummer: 04030017.0
(22) Anmeldetag: 17.12.2004
(51) Int. Cl.: B64D 11/00, B64D 11/06, B64D 47/02

(54) **Passagiersitz für eine Passagierkabine eines Verkehrsflugzeuges mit einer Sicherheits- und Informationseinrichtung**
Passenger seat for the cabin of an aircraft with a safety and information device
Siège de passager pour la cabine d'un avion avec un dispositif de securité et d'information

(30) Priorität: 27.12.2003 DE 10361330
(43) Veröffentlichungstag der Anmeldung: 29.06.2005
(73) Patentinhaber: Airbus Deutschland GmbH, 21129 Hamburg (DE)
(72) Erfinder: Sprenger, Wilfried, 25761 Büsum (DE)
(74) Vertreter: Maiwald Patentanwalts GmbH

(56) Entgegenhaltungen:
- DE-A1- 10 052 594
- US-A- 1 261 246
- US-A- 3 762 766
- PATENT ABSTRACTS OF JAPAN Bd. 017, Nr. 311 (P-1556), 14. Juni 1993 (1993-06-14) & JP 05 028333 A (MITSUBISHI PRECISION CO LTD), 5. Februar 1993 (1993-02-05)

## Beschreibung

Die Erfindung betrifft eine Anordnung einer Sicherheits- und Informationseinrichtung an mindestens einem Passagiersitz in einer Passagierkabine eines Verkehrsflugzeuges, wobei mehrere Passagiersitze innerhalb der Passagierkabine entlang mindestens eines Längsganges angeordnet sind und jeweils Anzeigenelemente zur Sitzplatzorientierung an den gangseitigen Passagiersitzen angebracht sind.

Bei öffentlichen Verkehrsmitteln wie z.B. Autobus und Straßenbahn ist es selbstverständlich, dass den stehenden Fahrgästen verschiedene Halteelemente zur Absicherung gegen Hinstürzen beim Einwirken von Beschleunigungskräften zur Verfügung stehen. So sind viele Verkehrsmittel beispielsweise mit von der Decke hängenden Haltebügeln oder mit Haltestangen, welche den Boden oder die Sitzlehne mit der Decke verbinden, ausgerüstet. Da im Luftverkehr für jeden Passagier und auch für die Flugbegleiter generell ein Sitzplatz mit entsprechender Rückhalteeinrichtung (wie ein Sitzgurt) zur Verfügung stehen, sind vergleichsweise die im Bodenverkehr üblichen Halteelemente nicht vorgesehen. Bei Verkehrsflugzeugen sind jedoch auch die während des Fluges sich außerhalb der Sitze aufhaltenden Personen gefährdet, wenn beispielsweise Turbulenzen durchflogen werden. Neben dem Kabinenpersonal können sich während des Fluges auch Passagiere in den Gängen aufhalten, um den Kreislauf in Bewegung zu halten oder um die Toilette zu erreichen. Vor allem auf Langstreckenflügen befinden sich oft mehrere Passagiere in den Gängen und es kann dann vorkommen, dass das Flugzeug, wenn es in großer Höhe fliegt, ohne Vorwarnung auf ein Gebiet mit starken Scher- oder Vertikalströmungen (sogenannte "clear air turbulence") trifft. Dies ist vor allem für die in den Gängen befindlichen Personen gefährlich, welche in derartigen Momenten nicht gesichert den Beschleunigungskräften ausgeliefert sind.
Ohne diesen Sicherheitsaspekt zu berücksichtigen, ist auch das heute gebräuchliche Passagier-Informationssystem mit Anzeigeelementen zur Kennung der Sitzreihen und der Sitze für die Fluggäste beim Einsteigen schwer erkennbar. Die üblichen Anzeigeelemente sind nämlich meist oberhalb der Sitze unter den Gepäckablagen so positioniert, dass eine Zuordnung zum entsprechenden Sitz nicht direkt vorgenommen werden kann und ein Erkennen der jeweiligen Nummerierung nur in gebückter Haltung möglich ist. Aus der DE 100 52 594 ist bereits eine Vorrichtung zur Orientierung in einer Passagierkabine bekannt, wobei einzelne Anzeigeelemente gut sichtbar an den Sitzen angebracht sind, um so eine verbesserte Platzinformation anzubieten. In dieser Lösung sind jedoch keine Vorkehrungen zur Bereitstellung von Sicherungsmitteln erwähnt.

Somit ist es Aufgabe der Erfindung, eine Anordnung einer Sicherheits- und Informationseinrichtung an einem Fluggastsitz in der Kabine eines Verkehrsflugzeuges dergestalt auszubilden, dass sowohl die Sicherheit für die während des Fluges in den Gängen befindlichen Personen erhöht als auch die Informationsdarstellung zur Sitzplatzorientierung für einen Fluggast verbessert wird und somit zwei wesentliche Funktionen zur Verbesserung des Passagierkomforts unaufwändig erfüllt werden.

Diese Aufgabe wird bei einer gattungsgemäßen Anordnung mit den im Patentanspruch 1 angegebenen Maßnahmen gelöst.

Dabei ist insbesondere von Vorteil, dass eine kombinierte Sicherheits- und Informationseinrichtung durch eine als Griffelement ausgebildete Haltestruktur am gangseitigen Passagiersitz realisiert wird, wobei der besondere Vorteil in der Zusammenlegung der Funktionen Sicherheit und Informationsbereitstellung in eine einzige Einrichtung liegt. Es wird erreicht, dass mögliche Gefährdungen von Personen bei Turbulenzen während des Reiseflugs vermindert werden. Eine mögliche Gefahr, dass Personen unkontrolliert den Beschleunigungskräften ausgeliefert sind, kann mit dem Vorsehen von Haltegriffen als Sicherungsmöglichkeit eingeschränkt werden. Mit dem Vorsehen von gut sichtbaren Anzeigeelementen wird weiterhin die Bodenabfertigung beim Einsteigen in das Verkehrsflugzeug beschleunigt. Für die Airlines können somit durch Vermeidung von Unfällen Folgekosten reduziert werden sowie führen kürzere Bodenzeiten zu einem wirtschaftlicheren Flugbetrieb, was insgesamt die Attraktivität einer Flugzeugpassagierkabine mit einer erfindungsgemäßen Anordnung verbessert.

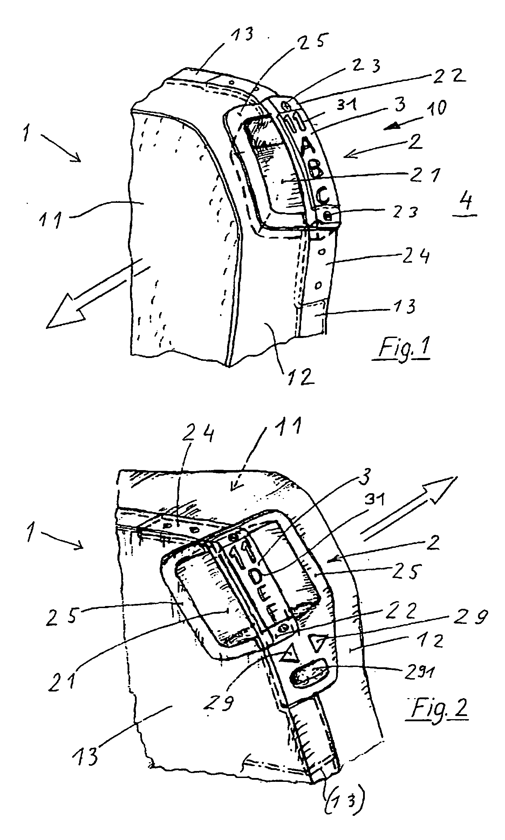

Weiterbildungen der Erfindung sind in den Unteransprüchen 2 bis 10 angegeben. Eine Beschreibung sowie die Darstellung weiterer Vorteile der Erfindung erfolgt nachstehend anhand der Zeichnung, Figuren 1 bis 4.

In der Zeichnung sind Ausführungsbeispiele der Erfindung dargestellt, wobei die jeweiligen Einzelelemente in allen Figuren das gleiche Bezugszeichen aufweisen.
Es zeigt:
- Fig. 1: eine Perspektivansicht der Anordnung einer Sicherheits- und Informationseinrichtung von vom,
- Fig. 2: eine Perspektivansicht der erfindungsgemäßen Anordnung von hinten,
- Fig. 3: Schnittdarstellungen eines Passagiersitzes in Auf- und Grundriss und
- Fig. 4: einen Schnitt durch einen erfindungsgemäßen Haltegriff.

**Fig. 1** zeigt die Anordnung einer Sicherheits- und Informationseinrichtung 10 an mindestens einem Passagiersitz 1 in einer Passagierkabine eines Verkehrsflugzeuges, wobei mehrere Passagiersitze innerhalb der Passagierkabine entlang mindestens eines Längsganges 4 angeordnet sind. Anzeigeelemente 31 zur Sitzplatzorientierung sind an den gangseitigen Passagiersitzen angebracht, vorzugsweise im Bereich der oberen Flanke 12 der Rückenlehne. An der oberen Flanke 12 des Passagiersitzes 1 ist ein erfindungsgemäßes Griffelement 2 als Haltestruktur angeordnet, welches mit den Anzeigeelementen 31 kombiniert wird. Das Griffelement 2 besteht aus den Bauteilen Griffmulde 21 und Haltegriff 22. In dem Haltegriff 22 eingelassen ist eine Anzeigeplatte 3, die zur Information der Passagiere dient. Es sind unter anderem die Anzeigeelemente 31 zur Kennung der Sitzreihen und der einzelnen Sitze vorgesehen. Der in der Zeichnung dargestellte Pfeil deutet in die Flugrichtung, so dass ein Teil der Rückenpolsterung 11 dem Betrachter zugekehrt ist. Die Seitenflanke 12 des Passagiersitzes 1 nimmt im oberen Teil gangseitig das Griffelement 2 auf. Damit ist eine gute Möglichkeit für die Passagiere gegeben zum einen, den Griff 22 zu ergreifen und zum anderen, die auf der Anzeigeplatte 3 wiedergegebenen Informationen zu erkennen. Das Griffelement 2 ist in dieser Anordnung im optimalen Zugriff- und Sichtbereich eines Passagiers vorgesehen. Je nach Bedarf kann der Griff 22 mittels Befestigungselementen 23 montiert sein, oder der Griff 22 bildet mit der Griffmulde 21 eine integrale Einheit. Zur Überleitung der auf den Haltegriff 22 wirkenden Kräfte auf die Lehnenstruktur 13 des Sitzes 1 ist ein Formteil 24 vorgesehen, welches z.B. aus gebördeltem Blech oder aus hochfestem Kunststoff besteht. Das Formteil 24 ist direkt mit dem Griff 22 verbunden oder mit der Griffmulde 21 integriert. Die Anzeigeplatte 3 verwendet in einer bevorzugten Ausführung elektronische Signale, welche in einer Leuchtanzeige aufscheinen. Die hierzu benötigte Kabelverbindung kann dabei vom Kabinenboden (nicht gezeigt) der Flugzeugpassagierkabine aus über den Sitz nach oben geführt werden. Das Anwendungspotential der elektronischen Signale kann dabei voll genutzt werden: von der statischen Anzeige über Sitzplatzinformationen (Sitzreihe, Sitzplatz) über aktuelle Hinweise an die Passagiere (z.B. Fasten Seatbelts) bis hin zu einem von Sitz zu Sitz wandernden Blinklicht zur Anzeige der Evakuierungsrichtung im Notfall oder Elementen der Notfallbeleuchtung.

In der Zeichnung nicht dargestellt ist eine Variante der Erfindung, wobei die Anzeigenplatte 3 nicht im Griff 22 sondern in dem dem Gang 4 zugekehrten Muldenflansch 25 eingelassen ist. In diesem Fall müsste der Flansch 25 eine entsprechende Verbreiterung aufweisen, was ohne weiteres möglich wäre. Eine Variante dieser Ausführungsform ist jedoch in Fig. 2 gezeigt.

In **Fig. 2** ist eine Sitzansicht des Passagiersitzes 1 von hinten wiedergegeben. Die Darstellung zeigt das Griffelement 2 und den Passagiersitz 1 mit der Lehnenstruktur 13 von hinten, wobei das Griffelement 2 in einer zweiten Ausführungsform mit einem verbreitertem Muldenflansch 25 gezeigt ist. Zum stabilen Einbau der Griffmodule 21 kann der Muldenflansch 25 zur Befestigung mit der Lehnenstruktur 13 mittels Befestigungselementen oder Klebung herangezogen werden. Eine weitere Möglichkeit der Verbindung von Griffmulde 21 und der Lehnenstruktur 13 besteht darin, dass beide Bauteile eine integrale Struktur bilden, z.B. mittels Herstellung als ein Formteil. In der Zeichnung ist die Lehnenstruktur 13 mit einem Flansch ausgebildet (strichpunktiert), der mit dem Formteil 24 und Griff 22 die Krafteinleitung der Haltekraft in die Sitzstruktur gewährleistet. Selbstverständlich kommen hier bezüglich Krafteinleitung noch andere Lösungen infrage, z.B. die oben genannte integrale Ausführung der Lehnenstruktur 13. In Fig. 2 ist der Muldenflansch 25 im unteren Bereich verbreitert, um zusätzliche Anzeigeelemente aufnehmen zu können. So sind beispielsweise Blinklichter 29 vorgesehen, die für den Notfall die Richtung der nächstliegenden Rumpföffnung anzeigen. Außerdem können auch Elemente 291 der Notfall/Fluchtwegbeleuchtung angebracht werden.

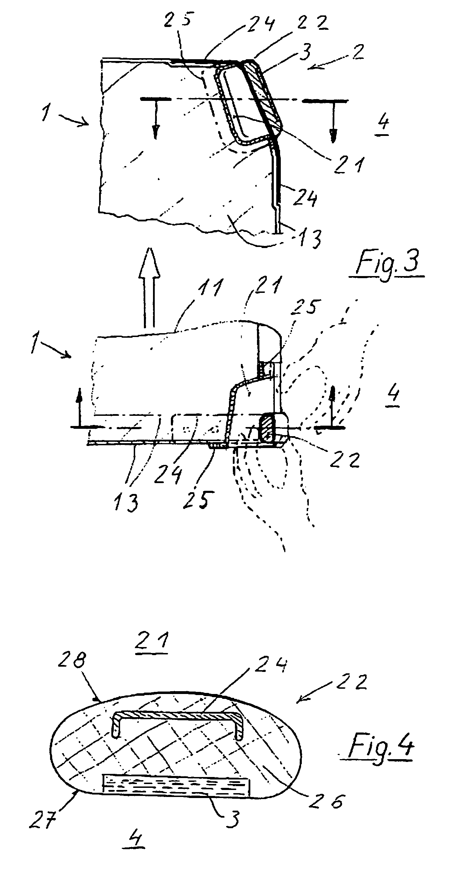

In **Fig. 3** sind Schnitte der erfindungsgemäßen Einrichtung in Auf- und Grundriss dargestellt. Im Aufriss ist erkennbar, dass das Griffelement 2 im Bereich des Gangs 4 keine Beeinträchtigung des freien Gangquerschnitts darstellt, da sich die Griffkontur weitgehend der Sitzflanke anpasst. Der Grundriss zeigt, dass der Zugriff (Hand punktiert dargestellt) in die Griffmulde 21 bzw. zum Griff 22 ohne weiteres möglich ist. Der Pfeil deutet die Flugrichtung an. Aus dem Grundriss zu ersehen ist auch die weitere vorteilhafte Möglichkeit, die Bauteile Lehnenstruktur 13 und Griffmulde 21 in ein Formteil zu integrieren wie es bereits in der Figurenbeschreibung zur Figur 2 beschrieben wurde.

Die **Fig. 4** zeigt einen Schnitt durch den Haltegriff 22. Die dem Gang 4 zugekehrte Außenseite 27 ist flach bis leicht gewölbt zur Aufnahme der Anzeigeplatte 3 ausgeführt, während die Griffinnenseite 28 eine ergonomisch gewölbte Kontur aufweist. Zur Ergänzung der guten Griffmöglichkeit wird zudem vorgeschlagen, den Griff 22 aus grifffreundlichem Kunststoffmaterial 26 herzustellen, welches eine leichte Elastizität besitzt. Zwecks Überleitung der Griffkräfte, welche vom Griff 22 auf die Lehnenstruktur 13 einwirken, ist im Innern des Griffs 22 ein Formteil (z.B. gebördeltes Stahlblech) 24 bedarfsweise vorgesehen. Bei entsprechender Steifigkeit der Griff-Bauteile 21 und 22 kann das Formteil 24 auch weggelassen werden.

### Bezeichnungsliste

- 1: Passagiersitz
10 Sicherheits-und Informationseinrichtung
11 Rückpolsterung
12 Seitenflanke/Sitzflanke
13 (Sitz)Lehnenstruktur
- 2: Griffelement
21 Griffmulde
22 Haltegriff
23 Befestigungselement
24 Formteil
25 Muldenflansch
26 Kunststoffmaterial
27 Griffaußenseite
28 Griffinnenseite
29 Blinklicht
291 Notbeleuchtung
- 3: Anzeigenplatte
31 Anzeigeelemente
- 4: Gang

## Patentansprüche

1. Sicherheits- und Informationseinrichtung zur Anordnung an mindestens einem gangseitigen Passagiersitz in einer Passagierkabine eines Verkehrsflugzeuges, wobei mehrere Passagiersitze innerhalb der Passagierkabine entlang mindestens eines Längsganges angeordnet sind und jeweils Anzeigenelemente zur Sitzplatzorientierung an den gangseitigen Passagiersitzen angebracht sind, **dadurch gekennzeichnet, dass** die Sicherheits- und Informationseinrichtung (10) weiterhin ein Griffelement (2) aufweist, das, bei Anbringung der Sicherheits- und Informationseinrichtung (2), am Passagiersitz (1) im Bereich der oberen, dem Gang (4) zugekehrten Seitenflanke (12) angeordnet ist und das als eine Griffmulde (21) mit daran befestigtem Haltegriff (22) ausgebildet ist und an der Griffaußenseite (27) oder an einem dem Gang (4) zugekehrten Muldenflansch (25) Anzeigeelemente (31) zur Passagierinformation vorgesehen sind.

2. Sicherheits- und Informationseinrichtung nach Anspruch 1, **dadurch gekennzeichnet, dass** die Anzeigeelemente (31) auf einer Anzeigeplatte (3) angeordnet sind, wobei die Anzeigeplatte (3) an der Griffaussenseite (27) oder am dem Gang zugekehrten Muldenflansch (25) befestigt ist.

3. Sicherheits- und Informationseinrichtung nach einem der Ansprüche 1 oder 2, **dadurch gekennzeichnet, dass** der Haltegriff (22) mittels Befestigungselementen (23) lösbar mit der Griffmulde (21) verbunden ist.

4. Sicherheits- und Informationseinrichtung nach einem der Ansprüche 1 oder 2, **dadurch gekennzeichnet, dass** der Haltegriff (22) zusammen mit der Griffmulde (21) ein Integralbauteil bildet.

5. Sicherheits- und Informationseinrichtung nach einem der Ansprüche 1 bis 4, **dadurch gekennzeichnet, dass** eine von der Griffmulde (21) bzw. dem Haltegriff (22) ausgehendes stabiles Formteil (24) in Wirkverbindung mit der Lehnenstruktur (13) des Passagiersitzes (1) steht.

6. Sicherheits- und Informationseinrichtung nach einem der Ansprüche 1 bis 5, **dadurch gekennzeichnet, dass** ein Muldenflansch (25) der Griffmulde (21) in Wirkverbindung mit der Lehnenstruktur (13) des Passagiersitzes (1) steht.

7. Sicherheits- und Informationseinrichtung nach einem der Ansprüche 1 bis 5, **dadurch gekennzeichnet, dass** die Griffmulde (21) ein integraler Bestandteil der Lehnenstruktur (13) ist.

8. Sicherheits- und Informationseinrichtung nach einem der Ansprüche 1 bis 7, **dadurch gekennzeichnet, dass** die Griffaußenseite (27) flach und die Griffinnenseiten (28) ergonomisch rund gehalten ist, sowie dass der Griff (22) aus grifffreundlichem Kunststoffmaterial (26) besteht.

9. Sicherheits- und Informationseinrichtung nach einem der Ansprüche 1 bis 8, **dadurch gekennzeichnet, dass** die Anzeigeplatte (3) als Leuchtanzeige mit Angabe der Sitzreihe und des Sitzes ausgebildet ist sowie bedarfsweise weitere Informationen abrufbar sind, wie aktuelle Hinweise und Warnungen an die Passagiere und/oder für den Fall der Fluchtwegbeleuchtung ein von Sitz zu Sitz wanderndes Blinklicht in Richtung des Fluchtweges schaltbar ist.

10. Sicherheits- und Informationseinrichtung nach einem der Ansprüche 1 bis 9, **dadurch gekennzeichnet, dass** der Muldenflansch (25) eine Aufnahmefläche für Anzeigeelemente, wie Blinklichter (29) oder Elemente der Notbeleuchtung (291) aufweist.

## Claims

1. Safety and information device for arranging on at least one aisle passenger seat in a passenger cabin of a commercial aircraft, wherein a plurality of passenger seats are arranged in the passenger cabin along at least one longitudinal aisle and wherein respective display elements for seating orientation are attached to the aisle passenger seats, **characterized in that** the safety and information device (10) further comprises a handle element (2), which handle element, when the safety and information device (10) is attached, on the passenger seat (1) is arranged, in the region of the upper lateral edge (12) of the passenger seat that faces the aisle (4), and wherein the handle element is formed in the shape of a recessed grip (21) with a handle (22) mounted thereon, and that display elements (31) for providing passenger information are arranged on the outer side of the handle (27) or on a recess flange (25) that faces the aisle (4).

2. The safety and information device of claim 1, **characterized in that** the display elements (31) are arranged on a display panel (3), with the display panel (3) being mounted on the outer side of the handle (27) or on the recess flange (25) that faces the aisle.

3. The safety and information device of one of claims 1 or 2, **characterized in that** the handle (22) is detachably connected to the recessed grip (21) by mounting elements (23).

4. The safety and information device of one of claims 1 or 2, **characterized in that** the handle (22) and the recessed grip (21) form an integral component.

5. The safety and information device of one of claims 1-4, **characterized in that** a stable formed part (24) that originates at the recessed grip (21) or at the handle (22) is functionally connected to the backrest structure (13) of the passenger seat (1).

6. The safety and information device of one of claims 1-5, **characterized in that** a recess flange (25) of the recessed grip (21) is functionally connected to the backrest structure (13) of the passenger seat (1).

7. The safety and information device of one of claims 1-5, **characterized in that** the recessed grip (21) forms an integral component of the backrest structure (13).

8. The safety and information device of one of claims 1-7, **characterized in that** the outer side of the handle (27) is flat and the inner sides of the handle (28) is ergonomically rounded, and the handle (22) is comprised of grip-amicable plastic material (26).

9. The safety and information device of one of claims 1-8, **characterized in that** the display panel (3) is formed as an illuminated display for displaying a row indication and a seat indication and, if so required, other information is available, such as up-to-date instructions and warnings for the passengers and/or a blinking light is switchable, that travels from seat to seat to provide directional information regarding the escape route in case of escape route illumination.

10. The safety and information device of one of claims 1-9, **characterized in that** the recess flange (25) comprises a surface for accepting display elements such as blinking lights (29) or emergency lighting elements (291).

## Revendications

1. Dispositif de sécurité et d'informations destiné à être installé sur au moins un siège de passager dans une cabine de passagers d'un avion de ligne, étant entendu que plusieurs sièges de passager sont disposés à l'intérieur de la cabine de passagers le long au moins d'une allée longitudinale et que les sièges de passager situés sur le côté de l'allée, comportent respectivement des éléments d'affichage permettant de localiser la place du siège,
**caractérisé en ce que** le dispositif de sécurité et d'informations (10) présente de plus un élément de poignée (2) qui, après mise en place du dispositif de sécurité et d'informations (2) sur le siège de passager (1), est disposé au niveau du flanc supérieur (12) dirigé vers l'allée (4) et qui est conçu sous forme d'un évidement (21) avec la poignée (22) qui y est assujettie et sur le côté extérieur de la poignée (27) ou sur une bride (25) dirigée vers l'allée (4) sont prévus des éléments d'affichage (31) pour l'information des passagers.

2. Dispositif de sécurité et d'informations selon la revendication 1,
**caractérisé en ce que** les éléments d'affichage (31) sont disposés sur une plaquette d'affichage (3), étant entendu que la plaquette d'affichage (3) est fixée sur le côté extérieur de poignée (27) ou sur la bride (25) dirigée vers l'allée.

3. Dispositif de sécurité et d'informations selon les revendications 1 ou 2,
**caractérisé en ce que** la poignée (22) est raccordée de façon amovible au moyens d'éléments de fixation (23) à l'évidement (21).

4. Dispositif de sécurité et d'informations selon les revendications 1 ou 2,
**caractérisé en ce que** la poignée (22) forme avec 1' évidement (21) un ensemble solidaire.

5. Dispositif de sécurité et d'informations selon l'une des revendications 1 à 4,
**caractérisé en ce qu'**une partie préformée stable (24) partant de l'évidement (21) ou de la poignée (22) se trouve en liaison active avec la structure de dossier (13) du siège de passager (1).

6. Dispositif de sécurité et d'informations selon l'une des revendications 1 à 5,
**caractérisé en ce qu'**une bride (25) de l'évidement (21) se trouve en liaison active avec la structure de dossier (13) du siège de passager (1).

7. Dispositif de sécurité et d'informations selon l'une des revendications 1 à 5,
**caractérisé en ce que** l'évidement (21) est une partie solidaire de la structure de dossier (13).

8. Dispositif de sécurité et d'informations selon l'une des revendications 1 à 7,
**caractérisé en ce que** le côté extérieur de poignée (27) est plat et les côtés intérieurs de poignée (28) sont conçus de façon ergonomiquement ronde et la poignée (22) consiste en un matériau plastique (26) agréable à la préhension.

9. Dispositif de sécurité et d'informations selon l'une des revendications 1 à 8,
**caractérisé en ce que** la plaquette d'affichage (3) est conçue en tant qu'écran lumineux avec indication de la rangée et du siège et qu'au besoin des informations complémentaires pourront y être consultées telles que des renseignements actuels et avertissements aux passagers et/ou pour le cas de l'éclairage des issues de secours, une lumière clignotante se déplaçant de siège en siège pourra être allumée.

10. Dispositif de sécurité et d'informations selon l'une des revendications 1 à 9,
**caractérisé en ce que** la bride de l'évidement (25) présente une surface de réception pour des éléments d'affichage tels que des voyants clignotants (29) ou des éléments de l'éclairage d'urgence (291)
